# EUROPEAN PATENT APPLICATION

(11) **EP 1 900 411 A1**
(43) Date of publication of application: **19.03.2008**
(21) Application number: 07113795.4
(22) Date of filing: 03.08.2007
(51) Int. Cl.: B01D 29/21, B01D 29/58

(54) **Filter**

(30) Priority: 07.09.2006 IN MU14362006; 08.11.2006 EP 06123662
(71) Applicant: UNILEVER N.V., 3013 AL Rotterdam (NL); UNILEVER PLC, London EC4P 4BQ (GB)
(72) Inventor: Chatterjee, Jaideep Hindustan Unilever Limited, 560 066, Bangalore (IN); Dagaonkar, Manoj Vilas Hindustan Unilever Limited, 560 066, Bangalore (IN); Majumudar, Udayan Hindustan Unilever Limited, 560 066, Bangalore (IN)
(74) Representative: Rosen Jacobson, Frans Lucas M.

(57) **Abstract**

The present invention relates to filters, particularly for filtration of water under gravity and to a process for making such filters. The invention more particularly relates to reliable filtration of particulate solids especially cysts and suspended solids in water, giving a high filtration flow rate, and which is effective for extended periods of time as compared to similar filters of the prior art. According to the invention there is provided a filter comprising layers of filtration media comprising a non-pleated layer and a pleated layer.

## Description

### Field of the invention

The present invention relates to filters, particularly for filtration of water under gravity and to a process for making such filters. The invention more particularly relates to a filter for filtration of water free of particulate solids especially cysts and suspended solids which is effective for extended periods of time as compared to similar filters of the prior art.

### Background prior art

The first step usually employed in the purification of water before it is consumed is to make it free of particulate solids. Once the water is free of suspended solids, it is treated by a variety of methods to make it free of noxious impurities like colour and smell and dissolved impurities like salts, chemicals, pesticides and its residues and harmful microorganisms like cysts, protozoa, bacteria and virus.

In urban areas, the municipalities usually provide piped potable water to every household through a network of pipes, after purifying the water in municipal water treatment plants. The methods employed in municipal water treatment plants include filtration of coarse suspended solids by using sand beds, use of flocculants and coagulants to precipitate out finer suspended impurities, use of ion-exchange resins to soften the water and use of halogens e.g. iodine and chlorine to kill the microorganisms.

In the rural areas, especially in the developing countries there is little if any such communal or municipal water treatment plants. Every household collects the water directly from lakes, rivers and wells. People have to individually purify the water collected by them. They usually resort to boiling of water to kill the germs. However, boiling is quite expensive and requires the use of fuel like coal, wood or oil which are scarce in rural areas. Moreover boiling does not remove the suspended solids. Many people use flocculants like alum to precipitate the suspended solids which is an effective method. However it is difficult to combine flocculation for removal of suspended solids along with other purification methods in a convenient household device for complete purification of water. Filtration is a commonly employed method for removal of suspended solids. Many different filtration media have been used in the past. Common filtration media include coarse muslin cloth, micro porous woven or non-woven polymeric cloth, clay, sand or carbon blocks. One of the most common problems with filtration in the past, especially when used to filter raw water under gravity is the choking of the filter. When choked, the filter is usually rejuvenated by either back flushing using a jet of air or washed under agitation in water. However, after a few such rejuvenation cycles, the filtration media gets irreversibly choked and there is no further flow or the flow rate of filtered water obtained is abysmally slow and the filtration media has to be replaced. Thus, the problem that has always eluded a satisfactory solution for filtration is to obtain sufficiently high flow rates of water during a filtration operation while ensuring that the desired filtration efficiency in removal of suspended solids is obtained. Both of the above are desired attributes in a good filter while a third requirement is that the life of the filtration media is long enough such that the media is required to be rejuvenated/ replaced fewer number of times by the consumer.

In attempting to the solve the above problems, many different filtration configurations have been published usually involving pleating the filtration cloth in order to maximize the filtration area for a given volume of the filter. EP0610755 (1994, Pall Corp), describes a filter medium that is pleated and comprises a multi-layer structure of overlapping layers of membrane material. W00222230 (2002, Cuno Inc.) describes a filter having a plurality of longitudinal pleats arranged in a spiral configuration in close proximity to each other. EP1554028 and US6315130 (both from Cuno Inc.) describes various other configurations centered around the concept of winding pleated filtration media in various ways spirally around a central core. US 5,232,595 discloses a combination of pleated layers which may be PP, PE or polyester and a non-pleated layer which is a membrane filter which may underlay the pleated layer or overlay the pleated layer (column 5 lines 50 to 55). US 3,520,417 discloses pleated layer superimposed by non-pleated layer both of which are filter paper. US 3,552,553 has pleated layer of paper (12) superimposed by non-pleated layer (16) of foam like material. US 2004/0,222,140 has pleated media (44, made of filtration material e.g. glass) surrounded by non-pleated first and second layer (38, 40) made of filtration material which may be glass, cellulose, spun-bound nylon or polyester.

The present inventors have experimented with the above disclosed designs and several other possible combinations and found that none of the above disclosed and other known filtration configuration are capable of providing an improved solution to the three divergent requirements described above. Further many of the prior art configurations are difficult to manufacture. The present inventors during the course of this work have developed a unique selective combination of configurations of filtration media that is able to solve most of the problems of the prior art filters while ensuring that the filter can be manufactured using a simple manufacturing process.

It is thus an object of the present invention to provide for a filter that ensures reliable filtration of particulate solids while giving a high filtration flow rate.

It is another object of the present invention to provide for a filter that ensures reliable filtration of particulate solids, gives a high filtration flow rate and has a life longer than prior art filters.

It is another object of the present invention to provide for a filter that ensures reliable filtration of cysts from water.

It is yet another object of the present invention to provide for filter which in addition to meeting the above objects can be manufactured using a process that is simple and inexpensive.

It has been surprisingly found that a filter comprising layers of non-pleated and pleated filtration media provides reliable filtration at high flowrate.

### Summary of the invention

Thus according to the first aspect of the invention there is provided a filter comprising layers of filtration media comprising a non-pleated layer and a pleated layer, wherein the filtration media is a woven or non-woven fabric and wherein the inner layer is non-pleated and outer layer is pleated

According to another aspect of the invention there is provided a process to prepare an embodiment of the filter of the invention comprising the steps of
(i) winding a filtration media spirally around a mandrel to a desired number of non-pleated layers;
(ii) forming layers of the filtration media into pleats of desired numbers; and
(iii) winding the pleated filtration media around said non-pleated layers.

The invention further provides a process for filtering suspended solids from water.

These and other aspects, features and advantages will become apparent to those of ordinary skill in the art from a reading of the following detailed description and the appended claims. For the avoidance of doubt, any feature of one aspect of the present invention may be utilised in any other aspect of the invention. It is noted that the examples given in the description below are intended to clarify the invention and are not intended to limit the invention to those examples per se. Similarly, all percentages are weight/weight percentages unless otherwise indicated. Numerical ranges expressed in the format "from x to y" are understood to include x and y. When for a specific feature multiple preferred ranges are described in the format "from x to y", it is understood that all ranges combining the different endpoints are also contemplated.

### Detailed description of the invention

The invention provides for an improved filtration configuration that is capable of effectively removing particulate solids. The types of particulate solids effectively removed by the filter of the invention are coarse particulate solids generally above 3 micrometers in size, microorganisms like cysts, and total suspended solids (TSS) while ensuring a high flow rate of water filtered under gravity head conditions. Chlorine resistant cysts such as *cryptosporidium parvum* and *Giardia Lamblia* which are in the size range of 2 to 8 microns, mostly 3 to 6, microns are effectively filtered by the filter of the invention.

By gravity head conditions is meant flow of water in the absence of any pressurization. The head of water is usually a few centimeters on the order of 10 to 100 cm, preferably 15 to 50 cm. The invention is for a filter comprising layers of filtration media comprising at least one layer which is non-pleated and at least one layer which is pleated.

The filtration media may be a woven or non-woven fabric. Of these, non-woven fabrics are more preferred.

The fabric used to make the filtration media could be any natural or synthetic material, preferably a synthetic material, more preferably a polymer and optimally a thermoplastic polymer. Suitable synthetic polymeric material are polyester, polypropylene or nylon, more preferably polyester.

The filter of the invention is useful to filter suspended solids having a particle size cut-off of 0.01 micrometers, preferably 0.05 micrometer, more preferably 0.1 micrometer. To further increase filtration reliability, it is preferred that the suspended solids have a size of less than 500 micrometers, more preferably less than 50 micrometers.

Preferably, the number of non-pleated layers is in the range of 1 to 10 and the number of pleated layers is in the range of 1 to 10. Optimal performance is obtained when the number of non-pleated layers is in the range of 1 to 5 and the number of pleated layers is in the range of 1 to 5. The invention works well when the total thickness of the filtration media comprising pleated layers is from 0.5 to 50 mm, preferably the thickness of the pleated layer is at least 1 mm, more preferably at least 2 mm, but preferably not more than 10 mm, or even not more than 6 mm. The total thickness of filtration media comprising non-pleated layers is from 0.5 to 50 mm, more preferably in the range of 1 to 10 mm, most preferably in the range of 2 to 6 mm. The layers of filtration media are preferably concentric layers, or spirally wound layers.

Cylindrical shape of the filter of the invention is preferred. When the filter is configured as a cylinder, the height of the cylinder is preferably between 1 cm to 100 cm and the diameter of the cylinder is between preferably 1 cm to 50 cm.

According to another aspect of the invention there is provided a gravity filtration device comprising
a top chamber and a bottom chamber;
the filter according to the present invention detachably attachable to the base of said top chamber;
such that liquid fed to the top chamber is filtered through said filter before collecting in said bottom chamber.

According to yet another aspect of the invention there is provided a gravity filtration device comprising
(a) a top chamber and a bottom chamber;
(b) a filter of the invention detachably attachable to the base of said top chamber;
(c) a biocide feeder;
(d) a retention chamber and
(e) a carbon filter
such that liquid fed to said top chamber is filtered through the filter of the invention before being treated with a biocide fed by said biocide feeder, the biocide treated liquid is then retained in said retention chamber for a predetermined period of time, after which the retained liquid is filtered free of excess biocide through said carbon filter before collecting in said bottom chamber.

The filter of the invention can be placed in any orientation preferably in the horizontal or vertical orientation in the said top chamber. It has been observed that the filter of the invention can be rejuvenated easily and the filter has a long life spanning several such use and rejuvenation cycles. The flow rate of filtered water after each such rejuvenation is consistently high.

These and other objects, advantages, and features of the invention will be readily understood and appreciated by reference to the following non-limiting preferred embodiment of the filter of the invention.

### Brief Description of the Figures

Figure-1 is a perspective view of an embodiment of the filter as per the invention comprising spirally wound layers of filtration media having one inner non-pleated layer and one outer pleated layer.
Figure-2 is a top view of the embodiment of Figure-1.

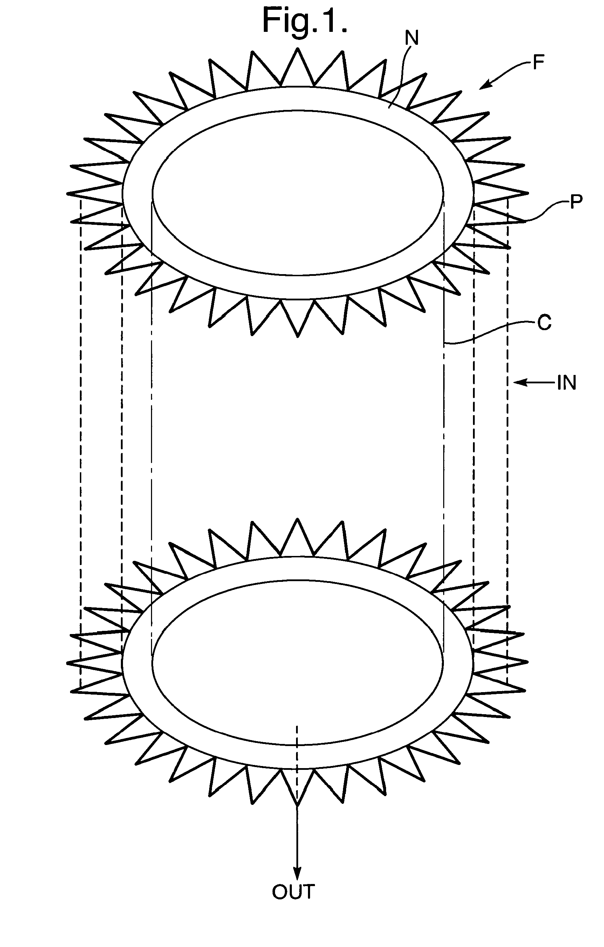

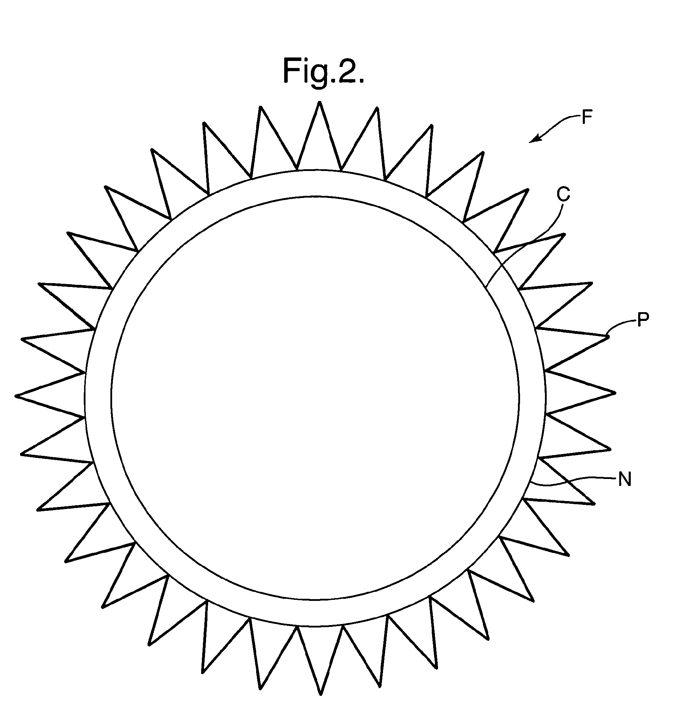

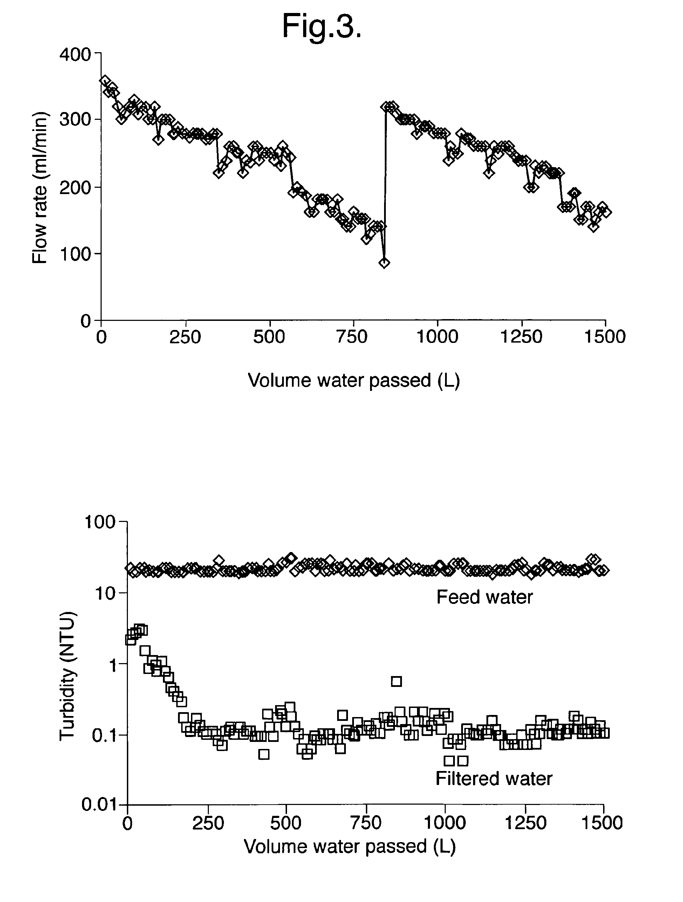

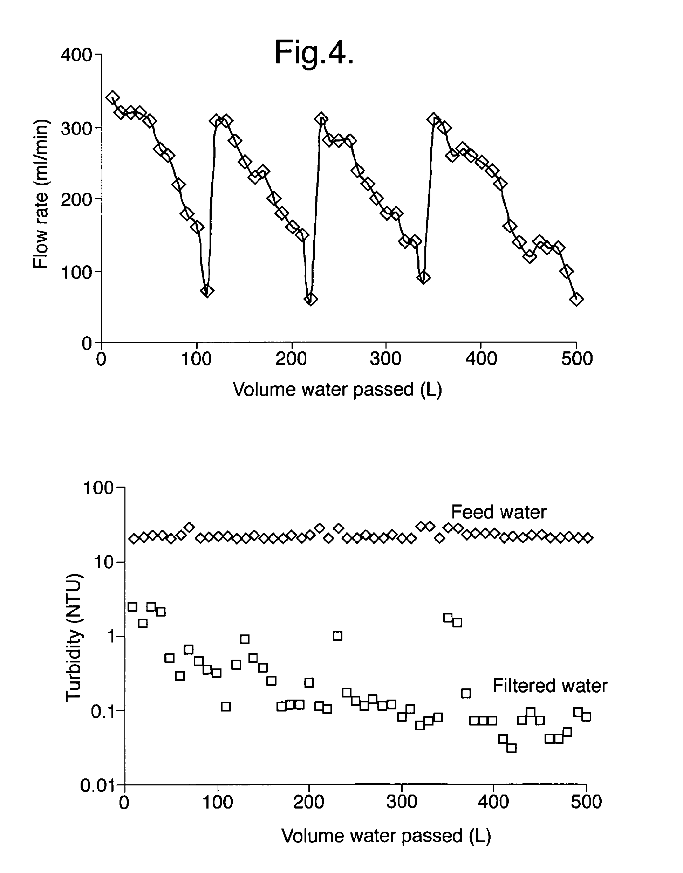

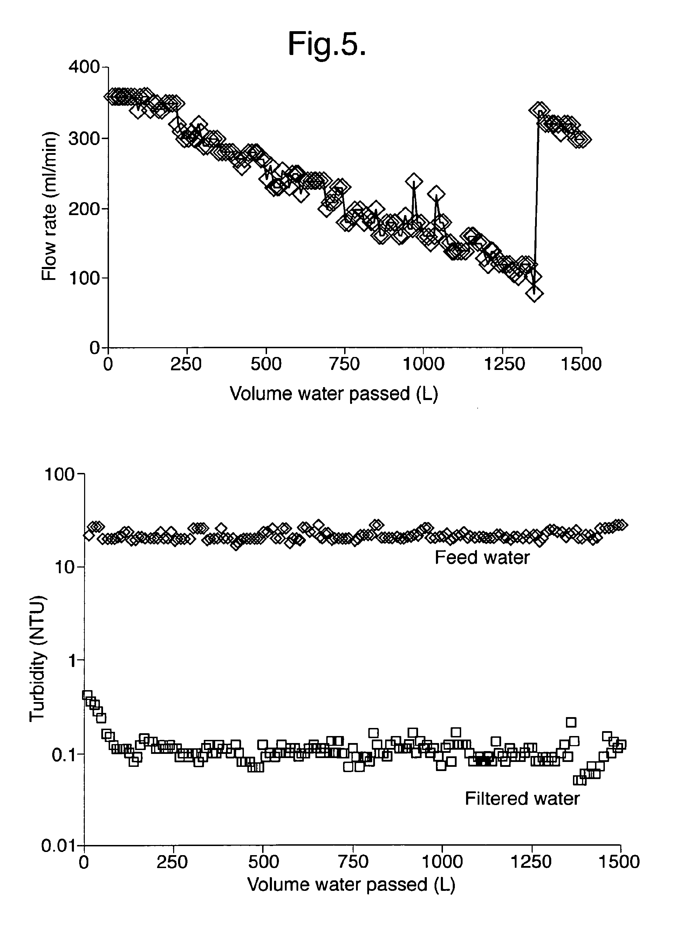

Figures 3 to 5 are graphs supporting the examples as explained herein below.

### Detailed Description of the Figures

Figure-1 depicts an embodiment of a filter (F) according to the invention having filter media wound around a perforated rigid cylinder (C). The filter media comprises one layer of non-pleated filter cloth (N) made of non-woven polyester material. Spirally wound around the non-pleated filter cloth is one layer of pleated filter cloth (P) made of non-woven polyester material.

Figure-2 depicts the top view of the filter as per Figure-1 with the parts labeled using the same legends.

When in use, water enters the filter from the outside as shown by the arrow (IN). The water is filtered free of suspended solids after passing first through the pleated filter cloth and then through the non-pleated filter cloth to exit the filter through the perforated rigid cylinder in the direction of the arrow (OUT).

### Examples:

### Comparative Example-A

A filter of the prior art comprising only a single layer of pleated filter cloth made of polyester material of about 2 mm thickness was prepared into a cylindrical shape of 8.2 cm inner diameter and 11.5 cm height. The total surface area of the filter was about 1800 cm². Feed water having a TURBIDITY of about 20 to 30 NTU was filtered through this filter using a head of about 15 cm. The experiment was carried out for a large volume of water of about 1500 litres of feed water which normally constitutes about 6 months of drinking water usage for an average household. The flow rate of filtered water was measured using a measuring cylinder and a stop watch. When the flow rate of filtered water reduced below 100 ml/minute, the filter was rejuvenated by agitation in water and the filter was reused to continue the experiment. The turbidity of the feed water and the filtered water was measured as described below. The data in Figure-3 summarizes the behaviour of the flow rate of filtered water over a period of time of usage of the filter and turbidity of the feed and filtered water.

The turbidity of the water was measured using a Merck Turbiquant 1500T turbidity meter. About 20 ml of a representative sample of the water was used for the measurement.

### Comparative Example-B

A filter of the prior art comprising only a single layer of non-pleated filter cloth made of polyester material of about 2 mm thickness was prepared into a cylindrical shape of 8.2 cm inner diameter and 11.5 cm height. The total surface area of the filter was about 296 cm². An experiment using similar feed water under similar conditions as described for Comparative Example-A was carried out using this filter. The turbidity of the feed water and the filtered water was measured. The data in Figure-4 summarizes the flow rate of filtered water and the turbidity of the feed and filtered water.

### Example-1

A filter as per the invention as shown in Figure-1 and 2, comprising an inner layer of non-pleated filter cloth and an outer layer of pleated filter cloth, made of polyester material and having a combined total layer thickness of about 2 mm (about 1 mm thick layer of non-pleated filter cloth and 1 mm thick layer of pleated cloth) was prepared into a cylindrical shape of about 8.2 cm inner diameter and 11.5 cm height. The total surface area of the filter was about 1900 cm². An experiment using similar feed water under similar conditions as described for Comparative Example-A and Comparative Example - B was carried out using this filter. The turbidity of the feed water and the filtered water was measured. The data in Figure-5 summarizes the flow rate of filtered water and the turbidity of the feed and filtered water.

The data in Figures 3, 4 and 5 indicates that Comparative Example-A (with single pleated layer) requires one rejuvenation after about 800 litres of water are fed and there is unsatisfactory levels of turbidity in the filtered water (greater than 0.1 NTU) till almost 250 liters of water are filtered. Comparative Example - B having single non-pleated layer is highly unsatisfactory both in terms of turbidity in filtered water and requires as many as three rejuvenations within the first 500 litres itself. The Example -1 of a filter as per the invention shows synergistic behaviour in that there is a rejuvenation required only after more than 1300 L of water are filtered and the desired low level of turbidity is obtained after only a few litres of water are passed through the filter.

### Example-2

A filter as per the invention as shown in Figure-1 and 2, comprising an inner layer of non-pleated filter cloth and an outer layer of pleated filter cloth, made of polyester material and having a combined total layer thickness of about 2.6 mm (about 1.3 mm thick layer of non-pleated filter cloth and 1.3 mm thick layer of pleated cloth) was prepared into a cylindrical shape to provide a total surface area of the filter of about 1300 cm².

A model feed water (as per NSF 53 protocol) was prepared as shown below:
Hardness (calcium carbonate): less than 170 mg/liter
Total dissolved solids: less than 300 mg/L
Turbidity: less than 1 NTU
Additionally the test water was loaded with cyst (*Cryptosporidium oocyst*) at a concentration of 8000/liter.

This test water was filtered through the filter of Example - 2 at a peak flow rate of 300 ml/minute.

The average cyst level in the filtered water was found to be about 118 per litre indicating a log removal of 1.83.

### Example-3

A filter as per the invention as shown in Figure-1 and 2, comprising inner layers of non-pleated filter cloth and an outer layer of pleated filter cloth, made of polyester material and having a combined total layer thickness of about 7.3 mm (three layers of 2 mm thick layer of non-pleated filter cloth and one layer of 1.3 mm thick layer of pleated cloth) was prepared into a cylindrical shape to provide a total surface area of the filter of about 1300 cm².
A model feed water as per Example-2 was prepared except that the test water was loaded with cyst (*Cryptosporidium oocyst*) at a concentration of 7000/liter.

This test water was filtered through the filter of Example - 3 at a peak flow rate of 300 ml/minute.
The average cyst level in the filtered water was found to be about 4 per litre indicating a log removal of 3.6.

The invention thus provides for a filter, a process for preparing the same and water filters which can be prepared using such filters which gives for the desired filtration efficiency of water under gravity flow conditions while providing the desired high flow rate over long periods of usage.

## Claims

1. A filter comprising layers of filtration media comprising a non-pleated layer and a pleated layer, wherein the filtration media is a woven or non-woven fabric and wherein the inner layer is non-pleated and outer layer is pleated.

2. A filter as claimed in claim 1 wherein said filtration media is non-woven fabric.

3. A filter as claimed in any one of the preceding claims wherein said fabric is made of polyester, polypropylene or nylon.

4. A filter as claimed in any one of the preceding claims comprising 1 to 5 non-pleated layers and 1 to 5 pleated layers.

5. A filter as claimed in any one of the preceding claims wherein the total thickness of the filtration media comprising pleated layers is from 0.5 to 6 mm and the total thickness of filtration media comprising the non-pleated layers is from 0.5 to 6 mm.

6. A filter as claimed in any one of the preceding claims for gravity filtration of water.

7. A process to prepare a filter as claimed in any one of the preceding claims comprising the steps of:
(i) ;winding a filtration media spirally around a mandrel to a desired number of non-pleated layers
(ii) forming layers of the filtration media into pleats of desired numbers;
(iii) winding the pleated filtration media around said non-pleated layers.

8. A process for filtering suspended solids from water, comprising the step of:
(i) Passing water through a filter comprising a non-pleated layer and a pleated layer.

9. A process according to claim 8, wherein the suspended solids have a particle size cut-off of 0.01 micrometers.
